# EUROPEAN PATENT SPECIFICATION

(11) **EP 2 364 329 B1**
(45) Date of publication and mention of the grant of the patent: **26.09.2018**
(21) Application number: 09768343.7
(22) Date of filing: 11.12.2009
(51) Int. Cl.: C08F 2/18, C08F 12/08, C08F 257/02, C08F 279/00, C08F 291/00, C08J 9/16, C08J 9/18, C08L 25/04, C08J 9/20, C08J 9/232

(54) **PROCESS FOR THE PREPARATION OF AN EXPANDABLE POLYMER COMPOSITION IN THE FORM OF BEADS**
VERFAHREN ZUR HERSTELLUNG EINER EXPANDIERBAREN POLYMERZUSAMMENSETZUNG IN PERLENFORM
PROCÉDÉ D'ÉLABORATION D'UNE COMPOSITION POLYMÈRE EXPANSIBLE SOUS FORME DE BILLES

(30) Priority: 12.12.2008 EP 08021631
(43) Date of publication of application: 14.09.2011
(73) Proprietor: Jackon GmbH, 23970 Wismar (DE)
(72) Inventor: TØGERSEN, Svein, N-23968 Gägelow (NO); TØGERSEN, Rune, 1602 Frederikstad (NO)
(74) Representative: Kaewert, Klaus
(86) International application number: PCT/EP2009/008895
(87) International publication number: WO 2010/066454

(56) References cited:
- EP-A- 0 000 572
- WO-A-2005/123816
- WO-A1-2004/087798
- DE-A1- 10 150 405
- JP-A- 2007 211 230
- JP-A- 2008 239 709
- US-A- 4 271 281
- US-A- 4 731 388
- US-A1- 2003 109 657
- US-B1- 6 239 224

## Description

The present Invention relates to a process for the preparation of an expandable polymer Composition in the form of beads and an expandable polymer composition in the form of beads obtainable by such process. Furthermore, the present invention relates to a pre-expansion process, a pre-expanded polymer composition obtainable by such pre-expansion process and an expanded moulded object.

An expandable polymer composition in the form of beads comprises a blowing agent which enables the expansion of said composition at a larger stage. Expandable polymer compositions are generally produced either by an extrusion process wherein a blowing agent is incorporated into a bulk polymer which is extruded and subsequently under water pelletized, or by suspension polymerisation arriving at spherical beads, wherein the blowing agent is incorporated into the polymer composition. From such an expandable polymer composition, moulded objects are generally obtained in three steps, typically 1.) a so-called "pre-expansion" (or "pre-foaming") step, 2.) a "maturation" (also called "stabilisation") step and 3.) a "moulding" (also called "sintering" or "fusion") step.

Conventionally, a blowing agent in expandable polymer compositions is required to be present at a substantial amount, mainly depending on the desired bulk density p_{bulk} of the moulded product. For so called "low density" moulded products, the bulk density p_{bulk in} a range of 10 to 30 kg/m³, while "high density" moulded products have a bulk density p_{bulk} in a range of 30 < p_{bulk} 120kg/m³. The bulk density is an important characteristic of the moulded object, because it not only influences the weight but also the physical characteristics of the moulded object. Thus, the application of the moulded object depends on its bulk density.

In general, volatile hydrocarbons such as n-pentane and iso-pentane are used as blowing agent. However, the emission of hydrocarbons in the atmosphere is problematic for environmental reasons. Therefore, there is a need for reducing the emission of such hydrocarbon blowing agents in the above described process for obtaining moulded objects.

WO 2005/019319 A1 defines an expandable polystyrene (abbreviated as "EPS") composition in the form of beads, which comprises 2.2 to less then 4.0 parts by weight of at least one blowing agent, and at least one plasticizing agent.

The use of a plastcizing agent is also described, for example in EP 0 696 037 A1 for preparing EPS.

US 2008/0067709 A1 describes an EPS composition comprising at least one modified clay with an at least partially lipophilic structure and 3 to 20 parts by weight of a blowing agent, which is water or a mixture of water with at least one other blowing agent, for example a hydrocarbon. The ratio by weight of a water/hydrocarbon mixture contained in such a composition ranges from 0.1/1 to 10/1.

JP 2007-211230 A discloses a recycling process for collected polystyrene resins containing an acrylonitrile styrene copolymer wherein resin pellets formed from recovery (i.e. already expanded) polystyrene resins containing an acrylonitrile styrene copolymer are used as seed material for a subsequent seed polymerisation.
Documents US 4,271,281 EP 0 000 572 A and US 4,731,388 disclose processes for preparing expendable polystyrene (EPS) compositions in the form of beads wherein seed polymerisation is applied and the finally obtained EPS composition contains blowing agent(s) in an amount of 2 to 15% by weight, 2 to 12% by weight and 2 to 10% by weight relative to the expandable composition, respectively. In these seed polymerisation processes, no attention is paid to an appropriate setting of the molecular weight of the obtained styrene polymer composition. The EPS compositions obtained by the aforementioned processes may contain a plasticizer.
In JP 2008-239709 A, a seed polymerisation process for preparing EPS is disclosed wherein no attention is paid to the content of blowing agent within the expandable polymer composition.
US 2003/0109657 A1 and US 6,239,224 B1 relate to processes for preparing expandable polymer compositions in the form of beads wherein seed polymerisation is applied. These documents neither disclose value ranges for the content of blowing agent within the expandable polymer composition, nor do they disclose value ranges for the molecular weight of the obtained polymer composition.
WO 2005/123816 A1 and DE 101 50 405 A1 respectively disclose a suspension polymerisation process wherein polystyrene in the form of side fractions of EPS production is dissolved in styrene.
WO 2004/087798 A1 discloses a conventional suspension polymerisation for preparing EPS beads.

In the above indicated prior art, special additional components like plasticizer or modified clays have to be incorporated into the EPS in order to reduce the content of hydrocarbon blowing agent. However, such additional components may seriously affect relevant physical properties of moulded objects obtained from such EPS.

Therefore, the object of the present invention is to provide an improvement of a process for the preparation of an expandable polymer composition.

### Summary of the invention

The object is solved by processes for the preparation of an expandable polymer composition in the form of beads according to claim 1. Preferred embodiments are set forth below and in the subclaims.

According to the present invention, is has been surprisingly found that a reduction of the amount of blowing agent can be effected without the necessity of incorporating a specific component in the composition intended for this purpose, such as a plasticizer. As a consequence, the emission of blowing agents can be beneficially reduced by significantly reducing the amount of said blowing agent within the expandable beads, while still providing excellent expandability and density control of the pre-expanded product and the final expanded moulded product. Moreover, various properties are improved owing to the advantage of the invention that plasticizers, clays or other special additives conventionally used for blowing agent reduction can be omitted. As a result, the moulded objects obtained from an expandable polymer composition according to the invention exhibit excellent physical and chemical properties, still in combination with economical and ecological benefits. In particular, the expandable polymer composition of the present invention can be processed with substantial energy savings, because pre-expansion and moulding of such expandable polymer compositions can be carried out at lower temperatures, which provides for substantial energy savings within the subsequent processing of these expandable polymer compositions

Various aspects, advantageous features and preferred embodiments of the present invention as summarized in the following items, respectively alone or in combination, contribute to solving the object of the invention: A process for the preparation of an expandable polymer composition in the form of beads, comprising the steps of:
a) making an aqueous suspension comprising at least seed material, one or more kinds or suspension stabilizer(s), one or more polymerisation initiator(s) and water, wherein the amount of seed material is 5 to 50 % by weight, preferably 10 to 30 % by weight of the finally obtained expandable polymer composition,
b) activate the seed material by contacting with one or more kinds of monomer(s) and optionally one or more kinds of polymerisation initiator(s), wherein the weight ratio of monomer(s) to seed material is 1/100 to 40/100, preferably 10/100 to 30/100, more preferably 15/100 to 25/100, and wherein the weight ratio of initiator(s) to monomer(s) is 0.5/100 to 20/100, preferably 2/100 to 10/100, and
c) heating said seed suspension of step b) to polymerisation temperature, wherein the polymerisation temperature is in the range of 70 to 130°C, preferably 80 to 120 °C, and
d) charging said seed suspension of step c) with at least one or more kinds of monomer(s) and optionally with one or more kinds of polymerisation initiator(s), and
e) adding at least one blowing agent before, during or after polymerisation, preferably during or after polymerisation,
wherein blowing agent is added to be contained in the expandable polymer composition in the form of beads in an amount of ≤ 5 percent by weight relative to the total composition, preferably less than 4 percent by weight relative to the total composition and more preferably less than 3 percent by weight relative to the total composition.
The term "polymer composition" used herein means, that the prepared composition comprises a homo- or copolymer. The polymer composition preferably contains de novo synthesized, i.e. yet unexpanded and yet unexpandable, polymers or copolymers. The polymer composition may comprise further additives, while advantageously plasticizer can be omitted. Suitable additives are organic additives which act, for example, as flame retardant, athermanous material, nucleating agent, pigment, dye or the like.

Preferably, said additives are provided in the form of nanoparticles, which provides for an advantageous improvement of the physical characteristics of the expandable polymer composition.
The term "expandable" used herein means that the polymer composition comprises a blowing agent for expansion of the composition at a later stage. A "blowing agent" is a substance which enables the expansion of the polymer composition in the form of beads by increasing the internal pressure within the beads. For example, an organic compound evaporating under pre-expansion conditions may act as blowing agent.
The term "seed material" as used herein means a polymer compositions in the form of particles, wherein these particles have a similar particle size than the beads of an expandable polymer composition finally obtained by the process according to the invention. Furthermore, the term "seed polymerisation" as used herein means a polymerisation allowing the seed material to grow in diameter by addition of monomer(s).
The term "% by weight of the finally obtained expandable polymer composition" means that the % by weight values given for step a) refer to the weight of an expandable polymer composition obtained by carrying out steps a) to e).
According to this beneficial aspect of the present invention, a reliable, robust and efficient process is provided. In step b), the seeds are activated by contacting with one or more monomer(s) and optionally one or more polymerisation initiator(s). Thereby, monomer(s) and polymerisation initiator(s) are allowed to diffuse into the seed material, preferably at a temperature which may be above ambient temperature, but which is below a temperature which would induce activation of the polymerisation initiator(s). This proceeding provides for a much faster charging of monomer(s) and initiator(s) In step d). Furthermore, by means of adjusting the content of seed material in step a), the content of monomer relative to the seed material in step b) and the polymerisation temperature of step c) within the above defined ranges, the polymerisation is less exothermic, and therefore, the system is less prone to problems of cooling capacity. Therefore, it is possible to provide excellent expandability of the expandable polymer composition while substantially reducing the content of the blowing agent within the expandable polymer composition.
Preferably, the blowing agent is added during or after polymerisation. In this way, presence of blowing agent in the seed before starting seed polymerisation is advantageously avoided, as the presence of blowing agent in the seed may affect the whole process and in particular the seed polymerisation process. Moreover, this measure and characteristic of the preferred embodiment of the invention is indicative of a distinct difference from cases where blowing agent is present in original polystyrene (co-)polymers, e.g. when conventionally applying unused oversize/undersize fractions of a previous production batch of expandable polystyrene (co-)polymers which, however, is associated with minor quality and leads to inappropriate molecular weight distribution. Further, this preferred feature is indicative of a distinct difference from cases where already pre-expanded or expanded (foamed) polymer is used as a starting material. Rather, the polymer of the seed material according to the present invention is most effective constituted by "de *novo* synthesized polymers". This is because unless well defined, de *novo* synthesized polymers for the seed material free of blowing agent and/or free of already pre-expanded or expanded polymers are used according to the present invention, there is a strong tendency to uneven distribution of additive in the seed material and consequently to uncontrolled and inferior product quality, while the properties of the final expandable polymer composition cannot b appropriated tailored as according to the present invention.

The process for the preparation of an expandable polymer composition in the form of beads, comprising the steps of:
i) providing seed material, and
ii) performing seed polymerisation to obtain a polymer composition having an average molecular weight M_{w} of up to 200,000 g/mol, preferably 100,000 to 170,000 g/mol, more preferably 100,000 to 150,000 g/mol and more preferably less than 130,000 g/mol.
As to the meaning of the terms "polymer composition", "expandable", "blowing agent", "seed material" and "seed polymerisation" and "% by weight of the finally obtained expandable polymer composition", reference is made to the explanations above.
The polymer of the seed material is most effective constituted by "de *novo* synthesized polymers" for the reasons elucidated.

The procedural concept according to this aspect of the invention involving seed material formation and then performing seed polymerisation provides for a very advantageous control of the heat energy released by the polymerisation reaction. This control is significantly accomplished by the seed polymerisation of step ii) following provision of appropriate seed
material of step i), whereupon the seed material is grown with monomer(s) and optionally polymerisation initiator(s) or additive(s) until the final, desired bead size of the expandable polymerisation composition is obtained. Since the seed material already contains pre-polymerised polymer, and since the weight ratio of monomer(s) to seed material is preferably 1/100 to 40/100, more preferably 10/100 to 30/100 and in particular 15/100 to 25/100 during polymerisation, the subsequent seed polymerisation reaction will be less exothermic compared to conventional suspension polymerisation starting from monomers without seed material. Therefore, the process according to the present invention enables an advantageous setting and upper limitation of the molecular weight of the polymer composition, without a problem of cooling capacity, especially when processing large industrial scales. Inter alia, this provides for a better control of the polymer design and an advantageous setting of the glass transition temperature T_{g} of the polymer composition.
The content of the blowing agent within the expandable polymer composition can be significantly lowered compared to convention expandable polymer compositions, yet providing for an efficient expandability of the expandable polymer composition at a later stage of pre-expansion and/or moulding, while stability and density control of the expandable polymer composition is ensured. As a consequence, the reduction of the content of blowing agent within the expandable polymer composition provides for less emission of blowing agent in further steps of pre-expansion and/or moulding, while the energy consumption of subsequent pre-expansion and/or moulding process(es) is substantially lowered also. The processing temperature of a pre-expansion and/or moulding step can be substantially lowered due to the advantageous control and setting of the molecular weight, which in turn provides for a relatively lower T_{g} of the polymer composition compared to conventional methods using the same monomer(s).
Typically, the minimum level for the content of blowing agent is selected with the proviso that sufficient expandability is provided for the respective application. For example, for insulation applications such as housing insulations, a higher content of blowing agent within the presently claimed limits is desirable compared to packaging applications. Packaging applications favour expanded moulded objects having relatively higher bulk densities, and therefore blowing agent contents can be further reduced to particularly low levels compared to other uses.
The whole process is performed without plasticizer.

The term "plasticizer" as used herein means a compound which would dissolve well in the polymer composition, therefore would embed itself between the polymer chains, spacing them apart. A "blowing agent" as meant herein herein is a substance different from a plasticizer substance. It is a substance which enables the expansion of the polymer composition in the form of beads by Increasing the internal pressure within the beads. For example, an organic compound evaporating under pre-expansion conditions may act as blowing agent. In further contrast to a plasticizer, a "nucleating agent" is a compound which does not dissolve in the polymer composition, i.e. it is phase-incompatible with the polymer. Preferably, such a nucleating agent is homogenously dispersed or finely distributed into the polymer composition by suitable means.
Thus, even if substances for "plasticizer" and "nucleating agent" might, as the case may be, belong to the same class of substances, e.g. waxes, attention is paid according to the present invention that they are provided and act in different ways as disclosed herein, depending on the type of polymer, other additives, contents and/or treatments or functionalization of composition components for the polymer composition, etc.

In this way, no plasticizer is required to eventually lower T_{g} owing to the advantageously adjusted molecular weight of the polymer composition, and/or owing to the activation of the seed material. Thanks to the excellent controllability of the seed polymerisation process used according to the present invention, it is possible to manufacture a polymer composition having a well balanced T_{g} while allowing a reduced content of blowing agent. The preferred range of T_{g} enables a remarkable reduction of the content of blowing agent within the polymer composition. The minimum value of T_{g} of the polymer composition can be suitably selected in view of the subsequent processing and the field of application of an expanded moulded object produced from said expandable polymer composition.

Obtained polymer has an average molecular weight M_{w} as mentioned above.
According to this preferred embodiment, M_{w} is suitable selected for polymers, preferably styrene polymers, such that the polymer is even more suitable for seed polymerisation and further processing. The preferred ranges of M_{w} enable a substantial further reduction of the content of blowing agent within a polymer composition.

This preferred embodiment provides an expendable styrene polymer composition (EPS) as a particularly advantageous kind of polymer composition. The polymerisation of styrene is particularly suited for seed polymerisation. Furthermore, the chemical and mechanical properties of EPS are particularly suited for further processing of the expandable polymer composition.

Preferably, the polymer in the seed material is constituted by de *novo* synthesized polymer, preferably non-expanded polymer selected from styrene polymers and copolymers.

Preferably, the seed material comprises inorganic or organic additives, preferably one or more flame retardant(s), one or more athermanous material(s), one or more thermoplastic elastomer(s), one or more compatible polymer(s), one or more nucleating agent(s), one or more pigment(s) or dye(s), one or more fillers and one or more special effect additives.
In many cases, inorganic or organic additives are particulates having sizes of micrometers or nanometers. Such particulates bear the risk of generation of harmful or explosive dusts when used in a process. The preferred embodiment of the present invention provides for a safe processing, as less such dusts will form, because the inorganic or organic additives are already incorporated into the seed.

Preferably, the beads directly obtained from the seed polymerisation are substantially monodisperse defined by a coefficient of variation of less than 15%, preferably less than 13% and more preferably less than 11%, and/or have a fineness defined by having a maximum particle size between 500 to 3000 µm. The term "substantially monodisperse" used herein means that for a plurality of particles (e.g. at least 100, preferably at least 1000), the beads of the expandable polymer composition have a coefficient of variation of less than 15%, wherein the term "coefficient of variation" is defined as standard deviation multiplied by 100, divided by the mean particle size of the beads.
Furthermore, the term "maximum particle size" used herein means the peak particle size for detectable particles, observed in the particle size distribution determined by using a particle size determination apparatus.

In this way, it is possible to directly yield monodisperse expandable beads. Therefore, the necessity of one or more grading step(s) in order to separate particles/beads having different sizes is less likely. Furthermore, the overall yield of the process according to the invention is higher compared to conventional suspension polymerisation, because there is limited "off-specification" material, I.e. material having bead/particle sizes below or above the bead/particle sizes typically used in industry.

Preferable, at least one blowing agent is incorporated by an impregnation step, wherein the polymer composition is impregnated with said at least one blowing agent.
The term "impregnation" as used herein means diffusion of the blowing agent into the polymer composition in the form of beads. The impregnation with at least one blowing agent provides for expandability of the polymer composition.
The at least one blowing agent may be an organic solvent which is compatible with the conditions of the process, polymer composition and the reactants used as well as the temperature conditions of the steps of the process. Furthermore, blowing agent(s) may be chosen which provide for more environment friendly emissions of the process.

Preferably, the blowing agent comprises one compound or a mixture of compounds selected from the group consisting of substituted or unsubstituted aliphatic or cyclic hydrocarbons having 3 to 8 carbons, preferably propane, pentane, cyclopentane, cyclobutane, methyl chloride, ethyl chloride, dichlorodifluoromethane, propylene, butylene, more preferably pentane or butane, and in particular pentane. The above blowing agents provide for a rapid diffusion into the polymer composition. Furthermore, the blowing agents may be selected in view of environmental aspects. Therefore, non-halogenated hydrocarbons such as pentane or butane are preferred. Preferably, the blowing agent is selected on condition that its boiling point is lower than T_{g} of the polymer, more preferably its boiling point is in a range about -50 to +50°C.

Preferably, the polymer comprised in the composition is derived from monomers selected from the group consisting of styrene or styrene derivatives, acrylic acids and esters, preferably styrene, C₁₋₃alkyl substituted styrenes, halogenated styrenes, acrylic acid, methyl acrylate, butylacrylate, methacrylic acid, methyl methacrylate and ethyl methylmethacrylate, maleic acid and esters thereof, maleic anhydride, fumaric acids and esters thereof and acrylonitrile.

According to this embodiment of the invention, monomers particularly suitable for the polymer composition are defined. These monomers may be used alone, so as to provide a homopolymer, or in combination with one or more additional kinds of monomers, so-called comonomers, so as to provide a copolymer. Preferably, the polymer is a styrene or styrene derivative homo- or copolymer. Styrene polymers are advantageous from the economical view, as starting materials are well available and relatively inexpensive. The characteristics of the styrene or styrene derivative polymer may be improved by introducing one or more copolymer(s) other than styrene or styrene derivatives, preferably ethylenically unsaturated monomers such as acrylates and/or maleic- and/or fumaric acid or derivatives thereof.

According to this aspect of the invention, the advantageous polymer composition of the present invention is obtained by a seed polymerisation process.

Said composition is obtained by a seed polymerisation process.
According to this aspect of the invention, it has surprisingly been found that an upper limitation and preferably the control and setting of the molecular weight of the polymer within the above defined range by using a seed polymerisation allows to provide an expandable composition beneficially assisting in reducing the amount of blowing agent, wherein the obtained expandable polymer compositions under same conditions provide for similar or same expansion characteristics in pre-expansion or moulding of the composition compared to a conventional expandable polymer composition having higher content or blowing agent. By controlling and setting the molecular weight of the polymer within the above defined ranges, the glass transition temperature T_{g} of the polymer can be lowered compared to conventional expandable polymer compositions using the same monomer(s). Thus, lower processing temperatures for pre-expansion and/or moulding can be applied owing to the capacity of advantageously lowering T_{g} of the expandable polymer composition of the present invention. Therefore, energy consumption of subsequent pre-expansion and/or moulding processes can be substantially reduced.

The seed material comprises inorganic or organic additives, preferably one or more flame retardant(s), one or more athermanous material, one or more thermoplastic rubber(s) and elastomer(s), one or more nucleating agent(s), one or more pigment(s) or dye(s) and one or more special effect additives. Preferably, said inorganic or organic additives are provided in the form of nanoparticles, in order to further improve the characteristics of the expandable polymer composition.

According to this beneficial embodiment of the invention, the physical and chemical properties of the composition may be suitable tailored in view of the final moulded product. For example, the setting of flammability by flame retardant(s) or thermal conductivity by athermanous material(s) is important when the composition will be used for moulding insulation material for houses, while colouring by pigments(s) or dye(s) may be important for single serving tableware such as cups and trays.

Preferably in the expandable polymer composition the residual monomer content of the final expandable product is less than 1.000 ppm. In this way, the residual monomer content within the final expandable product is set to an acceptable low value. This is achieved by conducting a final polymerisation after the seeds have grown to a targeted bead size by seed polymerisation, in order to reduce the amount of non-polymerized monomer within the bead.

A pre-expansion process, comprising: subjecting the expandable polymer composition in the form of beads to a heat treatment. The term "pre-expansion" used herein means that the expandable polymer composition according to the invention is heated, e.g. by steam, to above its glass transition temperature T_{g}. The blowing agent contained in the composition in the form of beads expands, such that the bead volume of pre-expanded beads increases by a factor of about 40 to 80 compared to the original volume of beads consisting of expandable polymer composition. During this pre-expansion step, a part of the blowing agent originally comprised in the expandable polymer composition leaves the polymer composition. Therefore, the pre-expanded bead will have a decreased amount of blowing agent compared to the expandable bead.
This procedural concept according to the present invention enables reduced emission of blowing agent.
The pre-expanded polymer composition in the form of beads has a bulk density of less than 30kg/m³, preferably less than 25 kg/m³, more preferably less than 20 kg/m³ when blowing agent content is ≤ 5 percent by weight relative to the total composition, preferably less than 4 percent by weight relative to the total composition.
In this way, it is possible to yield different bulk densities suitable adapted for different applications. The bulk density of the pre-expanded beads does not only depend on T_{g} and the content of blowing agent of the polymer composition, but also on the residence time within a heating step of the pre-expansion process.

### Detailed description of the invention

The present invention is now described in more detail by referring to further preffered and further advantageous embodiments and examples, which are however presented for illustrative purposes only.

In order to improve a process for the preparation of an expandable polymer composition in the form of beads, extensive test series were carried out by the inventors to find critical factors that are particularly suited to manufacture a composition which allows to reduce the amount of blowing agent contained in the expandable polymer composition.
Conventionally, an expandable polymer composition in the form of beads may be obtained by a one-step suspension polymerisation. In such a one-step suspension polymerisation, a suspension of monomers and optional comonomers, initiators optionally of different kinds having different half-lives, water, suspending agent and further optional additives is formed.
Then, this suspension is heated such that polymerisation is effected.
In a alternative variant of the above one-step process, a polymer may be solved in the monomer first, and then suspension polymerisation is effected.
The two above described kinds of suspension polymerisation are relatively exothermic.
Therefore, there is a problem concerning the cooling capacity, especially when the polymerisation is done in large industrial scales with capacities of about 200,000 tons/year. Besides, the beads obtained by these suspension polymerisation processes have a broad bead size distribution.
The molecular weight M_{w} of the polymer contained in the expandable composition is of importance in the step of pre-expansion, wherein the expandable polymer compositions is heated to above its glass transition temperature T_{g}. This treatment effects that the composition becomes elastic, which allows its expansion due to the internal pressure arising from the evaporation of the blowing agent comprised in the expandable composition. However, simply reducing the amount of blowing agent added to the expandable polymer composition alone is insufficient; expandable polymer compositions having the same molecular weight but a different amount of blowing agent will result in pre-expanded polymer compositions or moulded objects having different bulk densities, because the composition comprising less blowing agent will be less expanded and thus result in a higher bulk density. A process according to one aspect of the invention provides an expandable polymer composition having an average molecular weight M_{w} of 100,000 to 170,000 g/mol, more preferably 100,000 to 150,000 g/mol and particularly less than 130,000 g/mol, wherein the content of the blowing agent within the expandable polymer composition in the form of beads is ≤ 5 percent by weight relative to the total composition. Proper setting of the molecular weight of the polymer by i) providing seed material and ii) performing seed polymerisation allows to counteract the absence of plasticizer, since the above defined value range for M_{w} provides for a T_{g} of the obtained polymer which is relatively lower than T_{g} of conventional polymers obtained by conventional polymerisation using the same monomer(s). When the process is advantageously performed without plasticizer, moulded objects exhibiting excellent physical and chemical properties can be formed from the expandable polymer composition obtained by the present invention. The manufacture of seed material may be carried out by an extrusion process a suspension polymerisation or a seed polymerisation to respectively obtain a pre-polymerized seed material. The seed polymerisation system used according to the present invention further enables control of the heat energy released by the polymerization reaction. For example, the relation between the amount of seed material and the amount of monomer may be selected such that the seed polymerization is less exothermic, and therefore, the system is less prone to problems of cooling capacity. This further facilitates an advantageous setting of T_{g} of the expandable polymer composition

As noted above, the seed polymerisation is carried out according to a preferred embodiment by the steps of:
a) making an aqueous suspension comprising at least seed material, one or more kinds of suspension stabilizer(s), one or more polymerisation initiator(s) and water, wherein the amount of seed material is 5 to 50 % by weight, preferably 10 to 30 % by weight of the finally obtained expandable polymer composition,
b) activate the seed material by contacting with one or more kinds of monomer(s) and optionally one or more kinds of polymerisation initiator(s), wherein the weight ratio of monomer(s) to seed material is 1/100 to 40/100, preferably 10/100 to 30/100, more preferably 15/100 to 25/100, and wherein the weight ratio of initiator(s) to monomer(s) is 0.5/100 to 20/100, preferably 2/100 to 10/100, and
c) heating said seed suspension of step b) to polymerisation temperature, wherein the polymerisation temperature is in the range of 70 to 130°C, preferably 80 to 120 °C, and
d) charging said seed suspension of step c) with at least one or more kinds of monomer(s) and optionally with one or more kinds of polymerisation initiator(s), such that polymerisation proceeds, and
e) adding at least one blowing agent before, during or after polymerisation, preferably during or after polymerisation,
wherein the content of the blowing agent within the expandable polymer composition in the form of beads is ≤ 5 percent by weight relative to the total composition, preferably less than 4 percent by weight relative to the total composition and more preferably less than 3 percent by weight relative to the total composition.
This aspect of the present invention provides for a particularly efficient processing of the polymerisation reaction which enables to reduce processing time and energy consumption of a seed polymerisation process, while simultaneously allowing to set the molecular weight of the polymer composition and in turn its T_{g} such that a content of blowing agent can be significantly reduced. Moreover, this preferred embodiment of the process enables a well-balanced adjustment of proper T_{g} range of the polymer composition even without plasticizer and in spite of low content of blowing agent.
"Activating the seed material" means that one or more compounds are allowed to diffuse into the seed material at a constant temperature or within a temperature range which is above ambient temperature, but below a temperature at which activation of polymerisation initiator(s) is induced. The seed polymerisation step of the process of the present invention enables to control the molecular weight distribution M_{w}/Mₙ, wherein M_{w} represents the weight average molar mass of the polymer composition and Mₙ represents the number average molar mass of the polymer composition, within a wide range. For example, the molecular weight distribution M_{w}/Mₙ of the expandable polymer composition may be adjusted within a range of 2.1 to 6.0, while conventional suspension polymerisation only provides molecular weight distributions M_{w}/Mₙ within a range of 2.4 to 2.7.

Generally, the condition of the aqueous suspension of step a) of the above described aspect depends on the surface tension of water used. In the present process, a "styrene in water" suspension is needed. However, in the case where the surface tension of water used is not suitable, an inverse suspension, that is a "water in styrene" suspension will form which makes it impossible to properly carry out the present seed polymerisation. Therefore, the person skilled in the art has to provide measures for suitably adjusting the surface tension of water used in order to form a "styrene in water" suspension, e.g. by an upstream water-treatment such as deionization and/or by adding suitable surface active agents.

Furthermore, the aqueous suspension of step a) of the above described aspect is preferably stabilized by one or more suspension stabilizers. Suitable suspension stabilizers may be selected from the group consisting of water-soluble high molecular organic compounds such as cellulose derivatives, polyols, polyvinylalcohols and polyalkylene oxides or almost water-insoluble inorganic particles such as tricalciumphosphate or sodium pyrophosphate.

The monomer(s) used in step d) are soluble in its/their own polymer, so as to allow diffusion of monomer(s) into the seed during polymerisation. This provides for a homogenous distribution of inorganic or organic additives contained in the seed material.

The polymerisation initiator is a radical former for initiating and maintaining the seed polymerisation. Among the possible radical formers known in the art, those which can be thermally activated are preferred. Thermally activable peroxides are particularly suitable for the present seed polymerisation. The polymerisation initiator is preferably selected also in view of its suitability for the seed suspension to be polymerised.

In both of the above described seed polymerisation processes, the content of the blowing agent within the expandable polymer composition in the form of beads is ≤ 5 percent by weight relative to the total composition, preferably less than 4 percent by weight relative to the total composition and more preferably less than 3 percent by weight relative to the total composition. It was surprisingly found that the content of the blowing agent within the polymer composition can be significantly lowered, while the expandable polymer composition in the form of beads still provides efficient expandability in a later stage of pre-expansion and/or moulding. This is effected by the advantageous procedural concept of the present invention, which provides for an advantageous setting of the molecular weight of the polymer composition and thus also provides for and advantageous setting of its glass transition temperature T_{g}. The expandable polymer composition will become elastic earlier during a pre-expansion step compared to a conventional, plasticizer-free expandable polymer composition having a relatively higher average weight M_{w}, and thus having a relatively higher T_{g}. Thus, at same residence times for pre-expansion, the expandable polymer composition produced according to the procedural concept of the invention will show an improved expansion compared to conventional expandable polymer compositions.

The seed material preferably comprises inorganic or organic additives such as one or more flame retardant(s), one or more athermanous material(s), one or more thermoplastic elastomer(s), one or more compatible polymer(s), one or more nucleating agent(s), one or more pigment(s) or dye(s), one or more filler(s) and one or more special effect additives.

By using seed material comprising the above mentioned additives, a homogeneous distribution of such additives within the expandable polymer composition can be attained. It is believed that in the seed polymerisation system used in the present invention, monomer and initiator can effectively diffuse into the seed material during the seed polymerisation process.

Incorporation of the above mentioned additives provides for an advantageous tailoring of the physical and chemical properties of the expandable polymer composition and of moulded objects obtained therefrom.

A nucleating agent is a substance which is able to initiate and control cell formation and growth within the beads, wherein the cells operate as gathering sites for the blowing agent. Therefore, a distribution of the nucleating agent, as provided by the process of the present invention, is highly preferable. The nucleating agent may be an inorganic substance such as talcum, carbon black and graphite, or an organic compound such as polyolefin waxes. The nucleating agent is preferably added, and in case of inorganic substance and especially when using carbon black and/or graphite should be added, into the seed material.

The specific thermal conductivity value of a moulded object can be set by incorporating an athermanous material. The specific thermal conductivity is also called "lambda". Mainly three different kinds of thermal conduction contribute to said lambda value: conduction through gas, conduction through solid and conduction through radiation. It is known in the art that the thermal conduction through radiation may significantly be lowered by incorporating materials absorbing infrared radiation, also called "athermanous materials", into the expandable polymer compositions. For insulation application such as housing insulations, a low value for lambda is highly desirable. Especially in view of the global warming due to extensive combustion of fossil fuels, it is highly desirable to reduce fuel consumption by housing insulations having as low lambdas as possible. By incorporating athermanous material as the additive(s) into the seed material, the lambda value of a moulded object can be set within an advantageous range. Suitable athermanous materials include, for example, aluminum, aluminum oxide, non-metal oxides, carbon black and graphite.

Furthermore, the self extinguishing properties of an expandable polymer composition or a moulded object manufactured thereof may be of importance, for example in an application in the field of housing insulations. Typically, halocarbons, in particular hexabromocyclododecane, have been used as flame retardants for expandable polymer compositions. However, the use of such halocarbons may be banned by law due to environmental concerns. Therefore, there is a need for new, more environmental friendly flame retardants. By carrying out numerous experiments, the present inventors found out that flame retardant and thermoplastic polymers or meltable chemicals such as melamine formaldehyde or cyanurate resins, phenol formaldehyde resins, polychlortrifluorethylene (PCTFE) and polyvinylchloride (PVC) and/or, in the case of polystyrene as the main polymer matrix of the expandable polymer composition, flame retarding thermoplastic polymers such as polyphenoxilene oxide (PPO) and polyphenoxilene sulphide (PPS) can be selected as alternative, organic flame retardants. Furthermore, organic phosphates and organophosphinates can be used as organic flame retardants. Suitable inorganic flame retardants can be selected from the group consisting of phosphates, aluminum or magnesium hydroxides, antimony trioxide, boron compounds, in particular borates, and various hydrates.

The "cushioning properties" of the expandable polymer composition or a molded object manufactured thereof is also important. Depending of the kind of packaging, a hard or flexible molded object is needed. The flexibility of an expandable polymer composition can be advantageously set by incorporating thermoplastic rubber(s) and/or elastomers. For expandable polystyrene compositions (EPS) for example, the present inventors found out that styrene block-copolymers representing thermoplastic elastomers, such as styrene-butatien-styrene (SBS), styrene-ethylene-butadiene-styrene (SEBS), styrene-ethylene-propylene-styrene (SEPS), styrene-ethylene-ethylene-propylene-styyrene (SEEPS) and methacrylate-butadiene-styrene (MBS), in particular styrene-butatien-styrene (SBS), are particularly suitable to set the cushioning properties of EPS.

Moreover, the heat distortion temperature of the expandable polymer composition or a molded object manufactured thereof can be set within a suitable range. For example, molded objects used as construction elements should have a high heat distortion temperature. Therefore, one or more compatible polymers can be incorporated into the expandable polymer compostion in order to suitably set the heat distortion temperature of the expandable polymer composition. Suitable compositions may include acrylic polymers such as PMMA, polyphenylensulfide (PPS), para-methyl styrene polymers (PMS), PE or other polyolefines such as PE, or copolymers thereof compatible with the polymer matrix, but are not limited thereto.
A filler may be a low cost additive for reducing production costs by partly replacing the relatively expensive polymer matrix of the expandable polymer composition. Preferably, water insoluble material(s)/compound(s) is/are used as such a filler.
Special effect additives allow to adapt the expandable polymer composition for certain applications. Special effect additives may include, for example, fungicides, UV-stabilizers, without being limited thereto.
However, besides of the inorganic or organic additives optionally already contained in the seed, further inorganic or organic additives from the above defined group may alternatively or in addition be added to the seed suspension before or after heating to polymerisation temperature. In this case, suitable measures have to be taken to keep the suspension stable and allow homogeneous incorporation of the further substances.
The beads obtained from the seed polymerisation may be coated, as the untreated surface of the expandable polymer composition *in* the form of beads would exhibit poor processing characteristics. For example, one problem during following processing of beads is electrostatic charging. Therefore, it is preferred to coat the beads finally obtained with an effective anti-static agent. The anti-static agent may be selected from the group consisting of esters of fatty acids and amines, quaternary ammonium salts, alkylphosphates and fatty alcohols condensed with ethylene oxide on to propylene oxide. Furthermore, it is preferred to coat the finally obtained beads with an anti-lumping agent. An anti-lumping agent prevents the beads from fusing together during the pre-expansion step. Anti-lumping agents may be selected from the group consisting of metal stearates, inorganic powders such as SiO₂ and CaCO₃ and powders of polymeric materials such as polyamide waxes.
The beads directly obtained from the process according to the invention are preferably substantially monodisperse defined by a coefficient of variation of less than 15%, preferably less than 13% and more preferably less than 11%, and/or have a fineness defined by having a maximum particle size between 500 to 3000 µm.

Such an advantageous setting of the maximum particle size distribution is enabled by a beneficial control of the growth of the polymer composition in the form of beads. The seed polymerisation process of the present invention is preferably carried out by providing substantially monodisperse seed material. In order to keep this monodispersity during polymerisation, it is preferred to take suitable measures in order to inhibit the formation of new polymer particles outside the seed material. Therefore, inhibitors may be added to the water phase and/or organic phase , preferably when growing the seeds to relatively big bead sizes.
The polymer composition is impregnated with at least one blowing agent. This impregnation step may be carried out before, during or after polymerisation, preferably during or after polymerisation. In order to avoid a retard of the polymerisation due to a dilution effect, it is preferred to carry out the impregnation step during the final polymerization step(s) or after polymerisation, e.g. after work-up of the final expandable polymer composition.

According to the invention, the expandable polymer composition comprises a polymer having an average molecular weight Mw of 100,000 to 170,000 g/mol, more preferably 100,000 to 150,000 g/mol and in particular less than 130,000 g/mol. The preferred ranges of molecular weight M_{w} provide for a further improved expandability of an expandable polymer, while the content of blowing agent contained in the polymer composition can be advantageously reduced.
A pre-expansion process according to one aspect of the invention comprises subjecting the expandable polymer composition in the form of beads to a heat treatment. The advantageous features of the polymer composition provide for an improved expandability of the polymer composition, which allows for reducing the processing temperature within the pre-expansion- and/or moulding step. A reduction of the steam pressure contributes to a reduced energy consumption of the process. Furthermore, advantageous mild conditions can be attained, as the polymer composition is exposed to lower temperature. Such a milder condition has an advantageous influence on the polymer composition, as the polymer composition is less affected by high temperature.
Another aspect of the present invention is an expanded moulded object, obtained by further expanding the pre-expanded polymer composition. The bulk density of the expanded moulded object is set by choosing a pre-expanded polymer composition having an appropriate bulk density. The bulk density of the expanded moulded object is set in view of the application of the expanded moulded object, such as housing insulation or packaging.

The following example is merely illustrative of the present invention. The example and modifications or other equivalents thereof will become apparent to those versed in the art in the light of the present entire disclosure.

### Brief description of the Figures

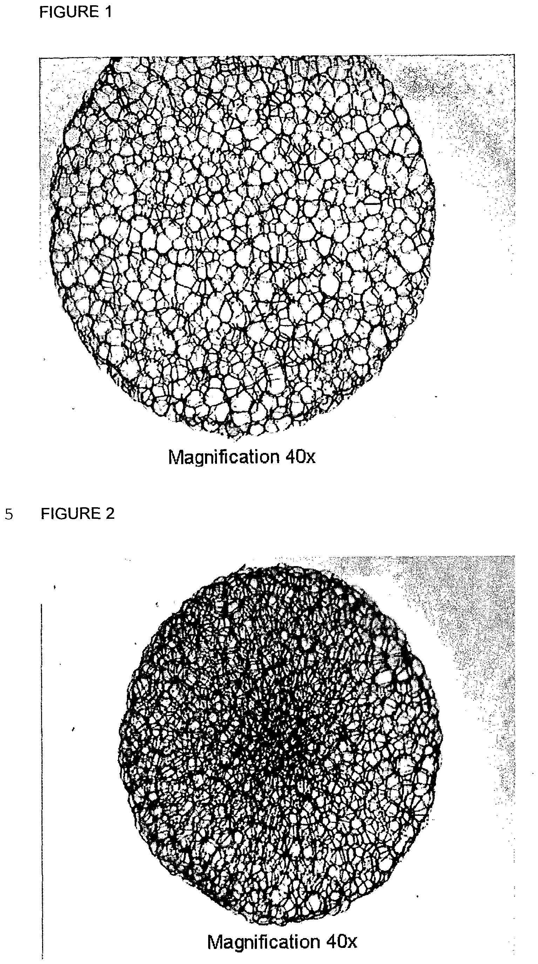

Figure 1 shows a microscopic sectional view (magnification factor: 40) of a pre-expanded polystyrene bead according to the Example of the present invention. Said pre-expanded bead was obtained from an expandable polystyrene bead comprising about 4% pentane, which was pre-expanded for 4 min. at 100°C. In this figure, the black areas represent the polymer matrix, while the colourless areas represent the cells, that is bubbles generated within the polymer matrix due to evaporation of the blowing agent during pre-expansion. The bead shows an advantageous, even cell distribution and cell size distribution.
Figure 2 shows a microscopic sectional view (magnification factor: 40) of a pre-expanded polystyrene bead according to the present invention, wherein the pre-expanded polystyrene bead was produces according to the Example of the present invention, but the amount of blowing agent used for the impregnation step was chosen with the proviso that the expandable polystyrene bead comprised about 3% pentane, which was pre-expanded for 4 min. at 100°C. In this figure, the black areas represent the polymer matrix, while the colourless areas represent the cells, that is bubbles generated within the polymer matrix due to evaporation of the blowing agent during pre-expansion. The bead shows an advantageous, even cell distribution and cell size distribution.

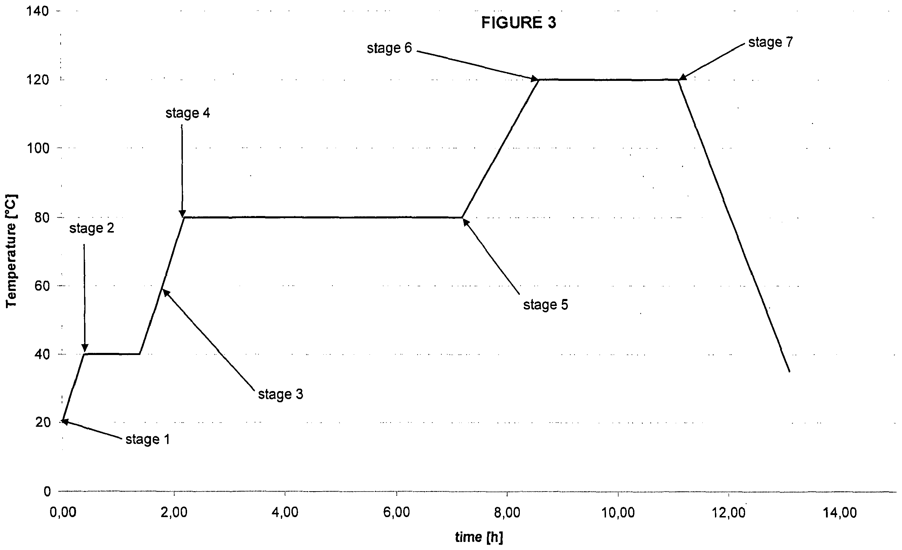

Figure 3 is a temperature versus time diagram of the process of the Example according to the invention. The diagram indicates relevant process stages of said Example, which are indicated in the following Table 1:

**Table 1**

| | |
|---|---|
| stage 1: | providing a seed suspension |
| stage 2: | beginning of activation of seed material: addition of SPO solution |
| stage 3: | end of activation of seed material; beginning of seed polymerisation at slow polymerisation rate |
| stage 4: | seed polymerisation at suitable polymerisation rate: charging of styrene monomer and SPO solution |
| stage 5: | end of seed polymerisation; beginning of impregnation step: charging of pentane mixture and beginning of final polymerisation for reducing the residual monomer content |
| stage 6: | reaching optimum temperature for final polymerisation and impregnation step |
| stage 7: | end of final polymerisation and impregnation step; beginning of cooling step |

### Example

A highly concentrated organic peroxide solution (in Fig. 3 referred to as SPO solution) was prepared beforehand containing 10.5 parts by weight of styrene monomer and 0.8 parts by weight of dibenzoyl peroxide (Perkadox L-W 75 from Akzo Nobel).

A seed suspension (cf. Fig. 3) comprising 100 parts by weight water, 0.9 parts by weight tricalcium phosphate, 0.01 part of sodium dodecyl benzene sulphonate, 19.7 parts by weight of seeds (spherical particles of 0.95 mm diameter) containing suspension made general purpose polystyrene (Jackopol PS from Jackon GmbH) and 0.09 parts by weight of tert-butylperoxy 2-ethylhexyl carbonate (Trigonox 117 from Akzo Nobel) was agitated in a polymerization reactor at ambient temperature and ambient pressure.

As shown in Fig. 3, the above described seed suspension was heated to 40°C, where 5 parts by weight of the SPO solution was added. The time at 40°C was totally 60 minutes in order to activate the seed material by contacting with monomer and polymerisation initiators. The suspension was then heated to 80°C in order to perform seed polymerisation at a suitable polymerisation rate, wherein 58 parts by weight styrene monomer and 6.3 parts by weight of the SPO solution were charged over the next 5 hours at 80°C.

Before closing the reactor 0.43 parts by weight tricalcium phosphate was added. After closing the reactor 3.1 parts by weight of pentane (a mixture of 20% isopentane and 80% n-pentane) was added during heat-up to 120°C in order to perform impregnation and final polymerisation for reducing the residual monomer content and held at this temperature for 150 minutes (cf. Fig. 3).

The reactor was then cooled to below 40°C and discharged to the holding tank, and after dewatering and drying the beads were surface treated with 0.05 parts by weight of zinc stearate. The particles were substantially spherical, and size classification as such was hardly required and could directly be used for processing.

The EPS obtained had an average molecular weight Mw of 123 000 g/mole. The obtained Mn was 42 000 g/mole (thus the Mw/Mn ratio was 2.93).

Pre-expansion (minimum density was 21 kg/m³ (100°C for 4 minutes), silo maturation and moulding went extraordinary well, and physical characteristics were surprisingly comparable with the conventional "white" EPS at same density.

## Claims

1. A process for the preparation of an expandable beads from polymer composition, wherein the beads are determined to be moulded in a form, comprising the steps of
a)making an aqueous suspension comprising at least seed material, one or more kinds of suspension stabilizer, one or more polymerization initiators and water, wherein the amount of seed material is 5 to 50% by weight of the finally obtained expandable polymer composition,
b)activate the seed material by contacting with one or more kinds of monomer and optionally one or more kinds of polymerization initiator, wherein the weight ratio of monomer to seed material is 1/100 to 40/100, and wherein the weight ratio of initiator to monomer is 0,5/100 to 20/100 and
wherein the whole process is performed free of plasticizer
c)heating said seed suspension of step b) to polymerization temperature, wherein the polymerization temperature is in the range of 70 to 130 degree Celsius, and
d)charging said seed suspension of step c) with at least one or more kinds of monomer and optionally with one or more kinds of polymerization initiator and
e)adding at least one blowing agent before, during or after polymerization, wherein the content of the blowing agent within the beads is less or equal 5 % by weight relative to the total composition
f) wherein the obtained polymer has an average molecular weight M_{w} of 100.000 to 170.000 g/mol and being obtained via radical polymerisation with thermal activable peroxide as initiator and pentane as blowing agent, and more preferably a polymer having a molecular weight less than 130.000 g/mol.

2. The process according one to claim 1, wherein the obtained polymer has an average molecular weight M_{w} of 100.000 to 150.000 g/mol and being obtained via radical polymerisation with thermal activable peroxide as initiator and pentane as blowing agent, and more preferably a polymer having a molecular weight less than 130.000 g/mol.

3. The process according to claim 1 or 2, wherein the content of the blowing agent within the expandable beads is less than 4 percent by weight relative to the total composition.

4. The process according to claim 3, wherein the content of the blowing agent within the expandable beads is less than 3 percent by weight relative to the total composition.

5. The process according to any one of claims 1 to 4, wherein the polymer composition is a styrene polymer composition .

6. The process according to any of the claims 1 to 5, wherein the polymer in the seed material is constituted by de novo synthesized polymer composition.

7. The process according to claim 6, wherein the polymer in the seed-Material is a non-expanded polymer selected from styrene polymers and copolymers.

8. The process according to any of the claims 1 to 7, wherein the seed material comprises inorganic or organic additives.

9. The process according to any of the claims 1 to 8, wherein a plurality of particles directly obtained from the seed polymerization have a plurality of particles with a coefficient of variation of less than 15%, wherein the term "coefficient of variation" is defined as standard deviation multiplied by 100, divided by the mean particle size of the beads.

10. The process according to any of the claims 1 to 9, wherein the beads have a fineness defined by a maximum particle size between 500 to 3000 µm.

11. The process according to any of the claims 1 to 10, wherein the blowing agent comprises one compound or a mixture of compounds selected from the group consisting of substituted or unsubstituted aliphatic or cyclic hydrocarbons having 3 to 8 carbons.

12. The process according to any one of claims 1 to 11, comprising subjecting the beads a pre-expanding before moulding by a heat treatment, wherein the beads are heated to above its glass transition temperature T_{g}, such that the blowing agent within the beads expands and the beads increase by a factor of 40 to 80 compared to the original volume of the beads.

13. The process according to claim 12, **characterized by** a pre-expanding until the beads have a bulk density of less than 30 kg/m³ when blowing agent content is less or equal to 5 percent by weight relative to the total composition.

14. The process according to claim 13, **characterized by** a pre-expanding until the beads have a bulk density of less than 20 kg/m³ when blowing agent content is less or equal to 5 percent by weight relative to the total composition.

## Patentansprüche

1. Verfahren zur Herstellung von schäumbaren Kügelchen aus einer Polymerzusammensetzung, wobei die Kügelchen dazu vorgesehen sind, in einer Form geformt zu werden, umfassend die Schritte des
a) Herstellens einer wässrigen Suspension, die wenigstens Impfmaterial, eine oder mehrere Arten eines Suspensionsstabilisators, einen oder mehrere Polymerisationsinitiatoren und Wasser umfasst, wobei die Menge des Impfmaterials 5 bis 50 Gew.-% der letztlich erhaltenen schäumbaren Polymerzusammensetzung beträgt,
b) Aktivierens des Impfmaterials durch das In-Kontakt-Bringen mit einer oder mehreren Monomerarten und gegebenenfalls einer oder mehreren Arten von Polymerisationsinitiator, wobei das Gewichtsverhältnis vom Monomer zum Impfmaterial 1/100 bis 40/100 beträgt und wobei das Gewichtsverhältnis vom Initiator zum Monomer 0,5/100 bis 20/100 beträgt und
wobei das gesamte Verfahren ohne Weichmacher durchgeführt wird, des
c) Erwärmens der Impfsuspension von Schritt b) auf eine Polymerisationstemperatur, wobei die Polymerisationstemperatur im Bereich von 70 bis 130 Grad Celsius liegt, und des
d) Zudosierens der Impfsuspension von Schritt c) zu wenigstens einer oder mehreren Monomerarten und gegebenenfalls zu einer oder mehreren Arten von Polymerisationsinitiator und des
e) Zugebens wenigstens eines Treibmittels vor, während oder nach der Polymerisation, wobei der Gehalt des Treibmittels innerhalb der Kügelchen weniger als oder gleich 5 Gew.-%, bezogen auf die gesamte Zusammensetzung, beträgt
f) wobei das erhaltene Polymer eine mittlere Molmasse M_{w} von 100 000 bis 170 000 g/mol aufweist und mittels radikalischer Polymerisation mit einem thermisch aktivierbaren Peroxid als Initiator und Pentan als Treibmittel erhalten wird, und bevorzugter ein Polymer mit einer Molmasse von weniger als 130 000 g/mol.

2. Verfahren nach Anspruch 1, wobei das erhaltene Polymer eine mittlere Molmasse M_{w} von 100 000 bis 150 000 g/mol aufweist und mittels radikalischer Polymerisation mit einem thermisch aktivierbaren Peroxid als Initiator und Pentan als Treibmittel erhalten wird, und bevorzugter ein Polymer mit einer Molmasse von weniger als 130 000 g/mol.

3. Verfahren nach Anspruch 1 oder 2, wobei der Gehalt des Treibmittels innerhalb der schäumbaren Kügelchen weniger als 4 Gew.-%, bezogen auf die gesamte Zusammensetzung, beträgt.

4. Verfahren nach Anspruch 3, wobei der Gehalt des Treibmittels innerhalb der schäumbaren Kügelchen weniger als 3 Gew.-%, bezogen auf die gesamte Zusammensetzung, beträgt.

5. Verfahren nach einem der Ansprüche 1 bis 4, wobei die Polymerzusammensetzung eine Styrol-Polymerzusammensetzung ist.

6. Verfahren nach einem der Ansprüche 1 bis 5, wobei das Polymer im Impfmaterial aus einer *de novo* synthetisierten Polymerzusammensetzung besteht.

7. Verfahren nach Anspruch 6, wobei das Polymer im Impfmaterial ein aus Styrolpolymeren und -copolymeren ausgewähltes nicht aufgeschäumtes Polymer ist.

8. Verfahren nach einem der Ansprüche 1 bis 7, wobei das Impfmaterial anorganische oder organische Additive umfasst.

9. Verfahren nach einem der Ansprüche 1 bis 8, wobei eine Vielzahl von direkt aus der Impfpolymerisation erhaltenen Partikeln eine Vielzahl von Partikeln mit einem Variationskoeffizienten von weniger als 15 % aufweist, wobei der Begriff "Variationskoeffizient" als Standardabweichung multipliziert mit 100, geteilt durch die mittlere Partikelgröße der Kügelchen, definiert ist.

10. Verfahren nach einem der Ansprüche 1 bis 9, wobei die Kügelchen eine durch eine maximale Partikelgröße zwischen 500 und 3000 µm definierte Feinheit aufweisen.

11. Verfahren nach einem der Ansprüche 1 bis 10, wobei das Treibmittel eine Verbindung oder eine Mischung von Verbindungen umfasst, die ausgewählt ist bzw. sind aus der Gruppe bestehend aus substituierten oder unsubstituierten aliphatischen oder cyclischen Kohlenwasserstoffen mit 3 bis 8 Kohlenstoffen.

12. Verfahren nach einem der Ansprüche 1 bis 11, umfassend das Einwirkenlassen eines Vorschäumens auf die Kügelchen vor dem Formen durch eine Wärmebehandlung, wobei die Kügelchen oberhalb ihrer Glasübergangstemperatur T_{g} erwärmt werden, sodass das Treibmittel innerhalb der Kügelchen expandiert und die Kügelchen um einen Faktor von 40 bis 80 im Vergleich zum ursprünglichen Volumen der Kügelchen zunehmen.

13. Verfahren nach Anspruch 12, **gekennzeichnet durch** ein Vorschäumen, bis die Kügelchen eine Schüttdichte von weniger als 30 kg/m³ aufweisen, wenn der Treibmittelgehalt weniger als oder gleich 5 Gew.-%, bezogen auf die gesamte Zusammensetzung, beträgt.

14. Verfahren nach Anspruch 13, **gekennzeichnet durch** ein Vorschäumen, bis die Kügelchen eine Schüttdichte von weniger als 20 kg/m³ aufweisen, wenn der Treibmittelgehalt weniger als oder gleich 5 Gew.-%, bezogen auf die gesamte Zusammensetzung, beträgt.

## Revendications

1. Procédé pour la préparation de billes expansibles à partir d'une composition polymère, dans lequel les billes sont déterminées pour être moulées dans une forme, comprenant les étapes de
a) fabrication d'une suspension aqueuse comprenant au moins un matériau de germe, un ou plusieurs types de stabilisant de suspension, un ou plusieurs initiateurs de polymérisation et de l'eau, dans lequel la quantité de matériau de germe est de 5 à 50 % en masse de la composition polymère expansible finalement obtenue,
b) activation du matériau de germe par contact avec un ou plusieurs types de monomère et éventuellement un ou plusieurs types d'initiateur de polymérisation, dans lequel le rapport massique de monomère à matériau de germe est de 1/100 à 40/100, et dans lequel le rapport massique d'initiateur à monomère est de 0,5/100 à 20/100 et dans lequel le procédé complet est réalisé en l'absence de plastifiant
c) chauffage de ladite suspension de germe de l'étape b) à la température de polymérisation, dans lequel la température de polymérisation se trouve dans l'intervalle de 70 à 130 degrés Celsius, et
d) charge de ladite suspension de germe de l'étape c) avec au moins un ou plusieurs types de monomère et éventuellement avec un ou plusieurs types d'initiateur de polymérisation et
e) addition d'au moins un agent gonflant avant, pendant ou après la polymérisation, dans lequel la teneur de l'agent gonflant dans les billes est inférieure ou égale à 5 % en masse par rapport à la composition totale
f) dans lequel le polymère obtenu présente une masse moléculaire moyenne M_{w} de 100 000 à 170 000 g/mol et étant obtenu via une polymérisation radicalaire avec un peroxyde thermiquement activable comme initiateur et du pentane comme agent gonflant, et encore mieux un polymère présentant une masse moléculaire inférieure à 130 000 g/mol.

2. Procédé selon la revendication 1, dans lequel le polymère obtenu présente une masse moléculaire moyenne M_{w} de 100 000 à 150 000 g/mol et étant obtenu via une polymérisation radicalaire avec un peroxyde thermiquement activable comme initiateur et du pentane comme agent gonflant, et encore mieux un polymère présentant une masse moléculaire inférieure à 130 000 g/mol.

3. Procédé selon la revendication 1 ou 2, dans lequel la teneur de l'agent gonflant dans les billes expansibles est inférieure à 4 pourcent en masse par rapport à la composition totale.

4. Procédé selon la revendication 3, dans lequel la teneur de l'agent gonflant dans les billes expansibles est inférieure à 3 pourcent en masse par rapport à la composition totale.

5. Procédé selon l'une quelconque des revendications 1 à 4, dans lequel la composition polymère est une composition polymère de styrène.

6. Procédé selon l'une quelconque des revendications 1 à 5, dans lequel le polymère dans le matériau de germe est constitué par une composition polymère synthétisée de novo.

7. Procédé selon la revendication 6, dans lequel le polymère dans le matériau de germe est un polymère non-expansé choisi parmi des polymères et copolymères de styrène.

8. Procédé selon l'une quelconque des revendications 1 à 7, dans lequel le matériau de germe comprend des additifs inorganiques ou organiques.

9. Procédé selon l'une quelconque des revendications 1 à 8, dans lequel plusieurs particules directement obtenues à partir de la polymérisation de germe présentent plusieurs particules avec un coefficient de variation inférieur à 15 %, dans lequel le terme "coefficient de variation" est défini comme écart type multiplié par 100, divisé par la taille moyenne de particule des billes.

10. Procédé selon l'une quelconque des revendications 1 à 9, dans lequel les billes présentent une finesse définie par une taille maximale de particule de 500 à 3 000 µm.

11. Procédé selon l'une quelconque des revendications 1 à 10, dans lequel l'agent gonflant comprend un composé ou un mélange de composés choisis dans le groupe consistant en hydrocarbures aliphatiques ou cycliques substitués ou non-substitués ayant de 3 à 8 atomes de carbone.

12. Procédé selon l'une quelconque des revendications 1 à 11, comprenant la soumission des billes à une pré-expansion avant le moulage par un traitement thermique, dans lequel les billes sont chauffées au-dessus de leur température de transition vitreuse T_{g}, de sorte que l'agent gonflant dans les billes se dilate et les billes augmentent d'un facteur de 40 à 80 en comparaison au volume d'origine des billes.

13. Procédé selon la revendication 12, **caractérisé par** une pré-expansion jusqu'à ce les billes présentent une densité volumique inférieure à 30 kg/m³ lorsque la teneur en agent gonflant est inférieure ou égale à 5 pourcent en masse par rapport à la composition totale.

14. Procédé selon la revendication 13, **caractérisé par** une pré-expansion jusqu'à ce que les billes présentent une densité volumique inférieure à 20 kg/m³ lorsque la teneur en agent gonflant est inférieure ou égale à 5 pourcent en masse par rapport à la composition totale.
